# EUROPEAN PATENT SPECIFICATION

(11) **EP 0 697 332 B1**
(45) Date of publication and mention of the grant of the patent: **21.05.1997**
(21) Application number: 95112973.3
(22) Date of filing: 17.08.1995
(51) Int. Cl.: B62M 23/02

(54) **Electrically assisted bicycle**
Fahrrad mit elektrischem Hilfsmotor
Bicyclette assistée par un moteur électrique

(30) Priority: 18.08.1994 JP 194445/94
(43) Date of publication of application: 21.02.1996
(73) Proprietor: HONDA GIKEN KOGYO KABUSHIKI KAISHA, Minato-ku, Tokyo (JP)
(72) Inventor: Ogawa, Sumitaka, c/o K.K. Honda Gijutsu Kenkyusho, Saitama (JP); Nakazawa, Yoshihiro, 4-1, Chuo 1-chome, Wako-shi, Saitama (JP); Honda, Satoshi, 4-1, Chuo 1-chome, Wako-shi, Saitama (JP)
(74) Representative: Liska, Horst, Dr.-Ing.

(56) References cited:
- EP-A- 0 559 231
- EP-A- 0 569 954

## Description

The present invention relates to an electrically assisted bicycle which utilizes electric power output by a motor thereof as a supplement to human power for pedaling the bicycle. In particular, the present invention relates to an electrically assisted bicycle wherein, by monitoring the voltage or current supplied to a motor thereof, unnecessary electric power can be prevented from being supplied.

Disclosed in Japanese Patent Laid-open No. H5-310177 is a proposed technology adopted by an electrically assisted bicycle wherein the output of an electric-power based driving system provided along with a human-power based driving system is controlled in accordance with variations in pedaling force. The operation of a dynamic part of a pedaling-force detecting means employed therein is not smooth and when a state in which a detected pedaling force exceeds a reference value set in advance continues for a period longer than a predetermined time, the output of the electric-power based system is limited in order to prevent the electric-power based system from generating an unnecessary output and, thus, to prevent the driving sense from worsening.

The technology of an overcurrent protection circuit is also known. A current flowing into a motor is detected by monitoring the voltage appearing between the ends of a current detecting resistor connected in series with the motor and, when the current exceeds an allowable current value set in advance, the overcurrent protection circuit cut off the conduction of current through the motor.

When the operation of the main control system for controlling the driving of the motor for generating supplementary electric power in accordance with the detected pedaling force becomes abnormal even if a pedaling force detecting means itself functions normally, unnecessary electric power is inevitably generated by the motor, giving rise to a risk of losing the driving sense.

In the case of a PWM controlled motor operation, a failure may occur due to an increased leak current which failure is difficult to handle adequately by means of the conventional overcurrent protection circuit. This is because such an increased leak current is not so great in magnitude as an overcurrent exceeding an allowable current value so that the failure is not considered to be as serious as a failure caused by a short circuit in a semiconductor switching device such as a power field-effect transistor for controlling the conduction of current through the motor or for switching the conduction on and off.

The present invention addresses the problem described above. It is an object of the present invention to provide an electrically assisted bicycle wherein no unnecessary supplementary electric power is supplied even if the operation of the main control system for generating a PWM signal for driving a motor to supply supplementary electric power in accordance with a detected pedaling force, the operation of a semiconductor switching device for switching the conduction of current through the motor on and off or the operations of other devices become abnormal.

In order to solve the problem described above, the present invention provides an electrically assisted bicycle characterized in that the electrically assisted bicycle is equipped with a motor-power-supplying termination means for terminating an operation to supply electric power to a motor when a state, in which the magnitude of a voltage or current supplied to the motor does not become equal to a value close to zero set in advance, has been continuing for a period longer than an allowable time set in advance.

The supplementary electric power supplied by the motor is controlled in accordance with the pedaling force (or a force working a pedal). Thus, the pedaling force becomes almost zero at the upper and lower dead points when the pedaling-force detection and the motor-operation control based on the detected pedaling force work normally. As a result, the voltage or current supplied to the motor becomes equal to a value close to zero periodically. When the pedaling-force detection and the motor-operation control system based on the detected pedaling force does not work normally, on the other hand, the voltage or current supplied to the motor does not become equal to a value close to zero periodically. The motor can thus be prevented from supplying unnecessary electric power by terminating the supplying of electric power to the motor when the fact that the voltage or current supplied to the motor does not become equal to a value close to zero is recognized.

In addition, the motor can also be prevented from supplying unnecessary electric power by terminating the supplying of electric power to the motor when an abnormality such as a failure caused by an increased leak current in the semiconductor switching device for switching the supplying of electric power to the motor on and off is detected.
Fig. 1 is a diagram showing a side view of an electrically assisted bicycle provided by the present invention;
Fig. 2 is a diagram showing a vertical cross section of a battery case;
Fig. 3 is a diagram showing a vertical side cross section of the rear part of the battery case and the lower part of a center case;
Fig. 4 is a model diagram showing structures of a transmission gear mechanism and a pedaling-force detecting means;
Fig. 5 is a block diagram showing the configuration of a control apparatus employed in the electric-power supplemented bicycle provided by the present invention;
Fig. 6 is diagrams showing typical circuit configurations of a motor-power-supplying termination means and a gate driving circuit;
Fig. 7 shows time charts of the operations of the control apparatus;
Fig. 8 is a diagram showing another typical configuration of the motor-power-supplying termination means;
Fig. 9 is a block diagram showing the configuration of the motor-power-supplying termination means based on motor-voltage detection;
Fig. 10 is a diagram showing the circuit configuration of an actual example of the control system;
Fig. 11 shows time charts of the operations of the motor-driving limiting means;
Fig. 12 shows a flowchart of the overall operation of the control apparatus; and
Fig. 13 is an explanatory diagram showing another typical configuration of a current detecting means.

The present invention will become apparent from the following detailed description of preferred embodiments with reference to accompanying diagrams.

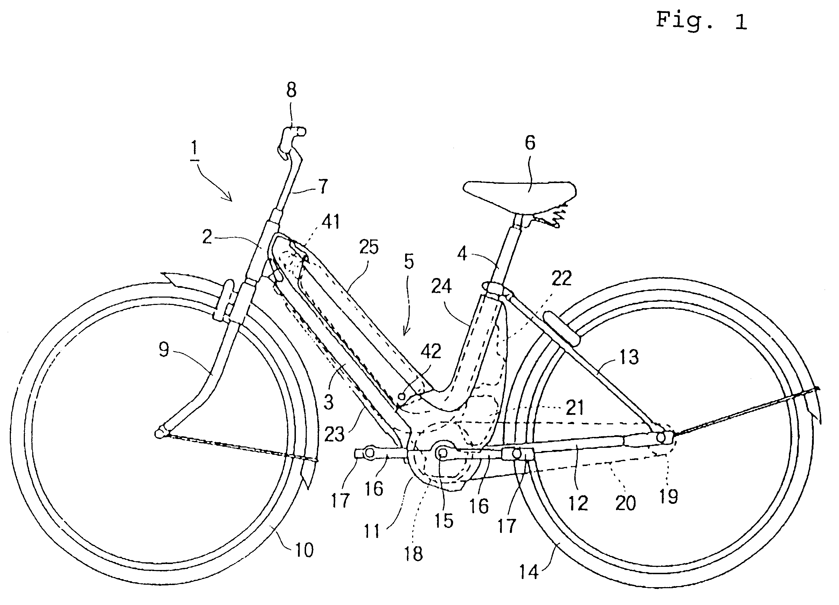

Fig. 1 is a diagram showing a side view of an electrically assisted bicycle provided by the present invention.

As shown in the figure, a down tube 3 is extended from a head pipe 2 of the electrically assisted bicycle 1 in a slanting backward-downward direction. The lower end of the down tube 3 is bent in a slanting backward-upward direction and a seat tube 4 is extended from the lower end of the down tube 3. The down tube 3 and the seat tube 4 form a main frame 5 which having a shape resembling all but the V character. A seat 6 is provided on the upper end of the seat tube 4.

A steering shaft 7 is inserted into the head pipe 2 in such a way that the steering shaft 7 can be rotated freely. A steering handle 8 is mounted on the upper end of the steering shaft 7 to form an assembly with the steering shaft 7 which assembly also includes a pair of right and left forks 9 extended from the lower end of the steering shaft 7. The axis of a front wheel 10 is attached to the lower ends of the right and left forks 9 in such a way that the front wheel 10 can rotate freely around the axis.

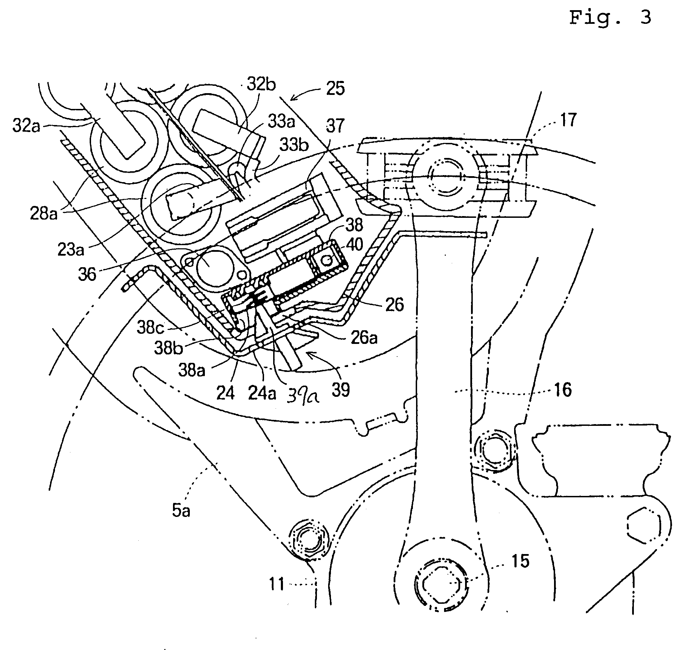

A downward protruding bracket 5a shown in Fig. 3 is provided on the lower part of the bent portion of the main frame 5, a cross-portion of the down tube 3 and the seat tube 4. A gear box 11 accommodating a transmission gear mechanism as well as serving as a crank case is mounted on the bracket 5a to form an assembly with the bracket 5a. The assembly also includes a rear fork 12 oriented in the longitudinal direction of the electrically assisted bicycle 1 with the front end of the rear fork 12 fixed to the gear box 11. A stay 13 is suspended between the rear end of the rear fork 12 and the seat tube 4. The axis of a rear wheel 14 is attached to the rear end of the rear fork 12 in such a way that the rear wheel 14 can rotate freely around the axis.

A crank shaft 15 is held by the gear box 11 in such a way that the crank shaft 15 can rotate freely. Crank arms 16 are fixed to the right and left ends of the crank shaft 15 to form a crank-shaft assembly. A pedal 17 is provided at the end of each of the crank arms 16.

An endless chain 20 is suspended on a driving sprocket 18 fixed on the crank shaft 15 as part of the crank-shaft assembly and on a driven sprocket 19 fixed on the rear wheel 14 as an assembly. When the crank shaft 15 is driven to rotate by pedaling forces applied to the pedals 17, the pedaling forces are passed on to the rear wheel 14 to also rotate the rear wheel 14 through the driving sprocket 18, the endless chain 20 and the driven sprocket 19. As a result, the electrically assisted bicycle 1 can be driven as an ordinary bike.

Furthermore, a driving motor 21 is fixed on the gear box 11 in a direction parallel to the seat tube 4. A control apparatus 22 is installed on the back-side surface of the seat tube 4 above the driving motor 21. The control apparatus 22 comprises, among other components, an electronic control unit and a motor driver for controlling the rotation of the driving motor 21. As the driving motor 21 rotates under the control of the control apparatus 22, a rotation torque output by the driving motor 21 is transmitted to the crank shaft 15 through the transmission gear mechanism, causing the electric power output by the driving motor 21 to supplement the human power.

As described earlier, the down tube 3 on the left side and the seat tube 4 on the right side, which form the main frame 5 with a shape resembling the V character, are veiled by a side cover 23 and a center cover 24 respectively. A long battery case assembly 25 is mounted on the upper surface of the inclined side cover 23 for veiling the down tube 3 in such a way that the battery case assembly 25 can be removed with ease.

A main switch 41 comprising key switches (combination switches) and the like is provided at the front end of the side cover 23. It should be noted that the battery case assembly 25 is put in such a structure that, when the main switch 41 is set to an on position, a lock apparatus interlocked with the operation of the main switch 41 makes the battery case assembly 25 unremoveable. Note that the lock apparatus itself is not shown in the figure.

In addition, a connection unit 42 comprising a charging connector and the like is provided on a side surface of the battery case assembly 25, allowing the battery to be charged even with the battery case assembly 25 mounted on the electrically assisted bicycle 1 as it is.

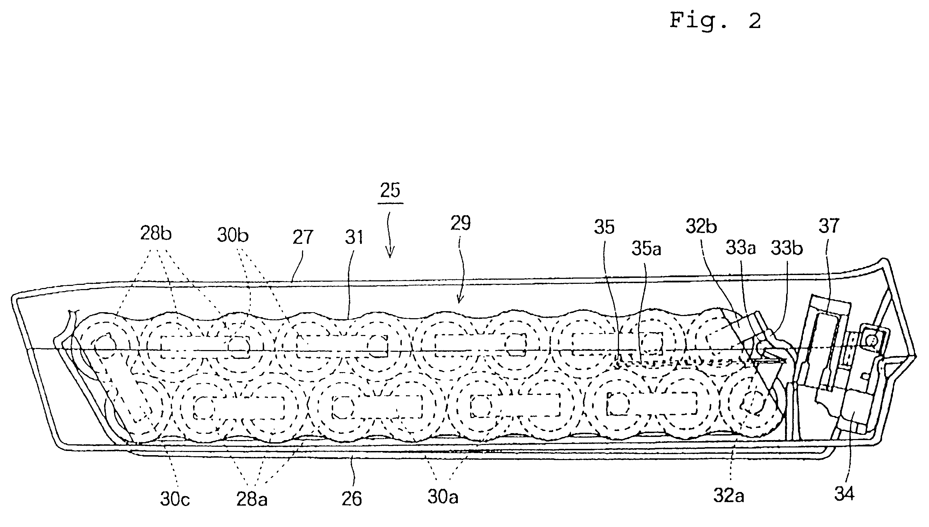

Fig. 2 is a diagram, showing a vertical cross section of the battery case assembly 25.

As shown in the figure, the battery case assembly 25 is divided into a lower case 26 on the lower side and an upper case 27 on the upper side. The battery case assembly 25 contains a power-supply battery set 29 comprising a lower row of ten battery cells 28a and a upper row of ten battery cells 28b. The battery cells 28a and 28b are each a cylindrical single-type Ni-Cd (Nickel-Cadmium) battery cell. The power-supply battery set 29 can be removed from the battery case assembly 25 with ease.

In addition, the upper case 27 of the battery case assembly 25 is part of the external surface of the body of the electrically assisted bicycle 1.

The power-supply battery set 29 has the following configuration. Two adjacent Ni-Cd battery cells 28a have their positive and negative poles placed alternately. The ten Ni-Cd battery cells 28a are arranged in such a way that their outer surfaces come into contact with each other into a lower row perpendicular to the center lines of the Ni-Cd battery cells 28a. In each upper dent between two adjacent Ni-Cd battery cells 28a on the lower row, an upper Ni-Cd battery cell 28b is laid down in such a way that the ten Ni-Cd battery cells 28b form an upper row right above the lower row. The positive pole of a Ni-Cd battery cell 28a on the lower row is connected to the negative poles of the two Ni-Cd battery cells 28a adjacent thereto by connection plates 30a, each shown as a dashed-line square in Fig. 2, by soldering both the ends of the connection plate 30a to the positive and negative poles of two adjacent Ni-Cd battery cells 28a. Similarly, connection plates 30b are each used for connecting the positive and negative poles of two adjacent upper Ni-Cd battery cells 28b. The negative pole of an Ni-Cd battery cell 28a and the positive pole of an Ni-Cd battery cell 28b at the front ends of the lower and upper rows respectively, or the left ends shown in the figure, are connected to each other by a connection plate 30c. The lower and upper Ni-Cd battery cells 28a and 28b are inserted into a cylindrical film 31 made of thermally shrinking compound resin. The thermally shrinking compound resin cylindrical film 31 is then shrunk by heating it.

A connection plate 32a connected to the positive pole of an Ni-Cd battery cell 28a at the rear end of the lower row, or the right end shown in the figure, is assembled with a lead 33a by soldering one end of the lead 33a to the connection plate 32a. Likewise, a connection plate 32b connected to the negative pole of an Ni-Cd battery cell 28b at the rear end of the upper row, or the right end shown in the figure, is assembled with a lead 33b by soldering one end of the lead 33b to the connection plate 32b. The other ends of the leads 33a and 33b are connected to an electric-power supplying connector 34 through which electric-power is supplied to the control apparatus 22. For details of connections between the connection plate 32a and the lead 33a as well the connection plate 32b and the lead as 33b, refer to Fig. 3.

A thermally sensitive resistor element 35 such as a thermistor is provided between the Ni-Cd battery cells 28a on the lower row and the Ni-Cd battery cells 28b on the upper row. The thermally sensitive resistor element 35 is connected to an electric-power charging connector 36 shown in Fig. 3 through a lead 35a. When charging the Ni-Cd battery cells 28a and 28b by a charger not shown in the figure, the charger can monitor the temperature of the Ni-Cd battery cells 28a and 28b by measuring the resistance of the thermally sensitive resistor element 35.

In addition, the battery case assembly 25 also includes a variety of fuses 37 and circuit components such as diodes for preventing a charging voltage from being applied at an inverse polarity. It should be noted that the circuit components themselves are not shown in the figure.

Fig. 3 is a diagram showing a vertical side cross section of the rear part of the battery case assembly and the lower part of a center case.

An electric-power supplying connector 38 is provided at the rear end of the battery case assembly 25. The electric-power supplying connector 38 has a pair of right and left contactor terminals 38a made of a conductive and elastic material such as a copper alloy plate. Each of the contactor terminals 38a is fixed to a connector case by securing one of its end using a screw 40 and also connected electrically to the leads 33a and 33b. A connector 39, a counterpart of the electric-power supplying connector 38, is provided on a bottom wall 24a of the center cover 24. The connector 39 has a pair of protruding rod terminals 39a on the right and left sides. With the battery case assembly 25 mounted, the protruding rod terminals 39a are inserted into an opening 26a formed on a lower case 26 and an opening 38b on the electric-power supplying connector 38 respectively till the edges of the protruding rod terminals 39a come into contact with the contactor terminals 38a. With such an arrangement, electric power can be supplied from the battery cells 28a and 28b. The other ends of the contactor terminals 38a are pushed up by the protruding rod terminals 39a by a displacement against the forces of coil springs 38c provided on the displaced portions. With such a mechanism, sufficient contact pressures are obtained, making interruption of the supply of electric power difficult to occur which interruption is caused by vibration or the like generated while the electrically assisted bicycle 1 is running.

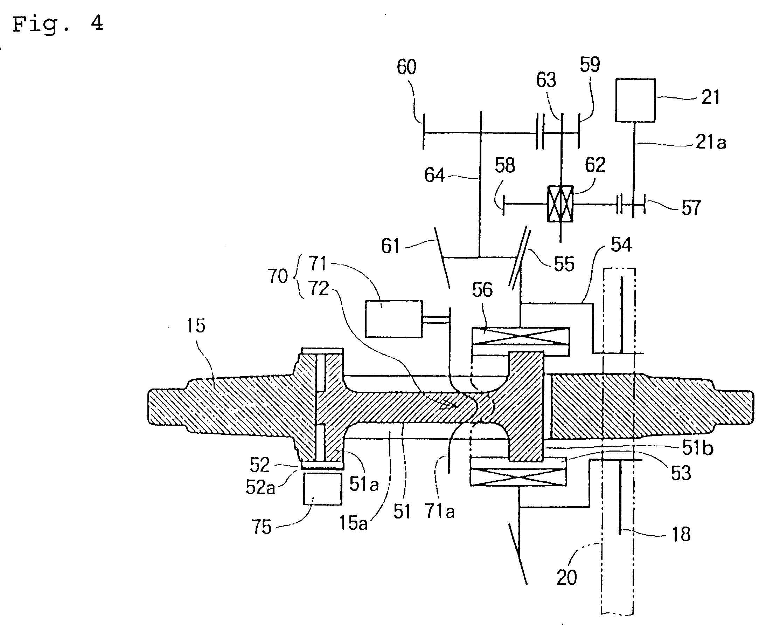

Fig. 4 is a model diagram showing structures of the transmission gear mechanism and the pedaling-force detecting means.

In the longitudinal mid of the crank shaft 15, a through hole 15a which is extended in the axial direction and penetrates in the radial direction is formed. A torsion bar 51 having the same axis as the crank shaft 15 is accommodated inside the through hole 15a. A head 51a formed at the left end (or the input end) of the torsion bar 51 is linked to the crank shaft 15 through a collar 52. A head 51b formed at the right end (or the output end) of the torsion bar 51 is, on the other hand, attached by pressure to a groove formed on the inner circumference of a driving member 53 having a shape resembling a ring. Wall surfaces of the through hole 15a of the crank shaft 15 facing each other are bent in such a way that their cross sections each form approximately a circular arc, allowing for a rotation of the torsion bar 51 by a predetermined angle relative to the head 51b on the free end side thereof and, at the same time, preventing the torsion bar 51 from being ruptured by an excessively big load applied thereto.

A first unidirectional clutch 56 is provided between a bevel gear 55 fixed on the inner circumference of a sleeve 54 and the ring-shaped driving member 53. When forces are applied to the pedals 17 not shown in the figure to rotate the crank shaft 15 in the forward direction, a torque output by the crank shaft 15 is transmitted to the driving sprocket 18 spline-connected to the outer circumference of the sleeve 54 through the torsion bar 51, the ring-shaped driving member 53, the bevel gear 55 and the sleeve 54. The torque is then transmitted to rear wheel 14 through the endless chain 20 and the driven sprocket 19 shown in Fig. 1. When forces are applied to the pedals 17 not shown in the figure to rotate the crank shaft 15 in the backward direction, on the other hand, the first unidirectional clutch 56 slips, allowing the crank shaft 15 to rotate in the backward direction.

When the driving motor 21 is driven to rotate, a torque produced by an output shaft 21a thereof is transmitted to the driving sprocket 18 through four super gears 57, 58, 59 and 60, the bevel gear 55 and another bevel gear 61. A second unidirectional clutch 62 is provided on a first intermediate shaft 63 for avoiding a hindrance to rotation of the driving sprocket 18 driven by human power even when the driving motor 21 is at a standstill. It should be noted that reference numeral 64 denotes a second intermediate shaft.

The pedaling-force detecting means 70 comprises a torque-into-displacement converting means 71 for converting a twist caused by a pedaling force (or a torque) into a displacement in the axial direction and a stroke sensor 72 for outputting an electrical signal representing the displacement. The torque-into-displacement converting means 71 is configured to include engagement of a protruding cam surface formed on the end surface of a slider-inner 71a rotating along with the crank shaft 15 as an assembly with a dented cam surface formed on the end surface of the driving member 53.

In order to detect the rotational speed of the crank shaft 15, a tooth unit 52a is formed on the outer circumference of the collar 52 connecting the crank shaft 15 to the head 51a of the torsion bar 51. A crank-shaft speed sensor 75 is provided at a location exposed to the tooth unit 52a. The crank-shaft speed sensor 75 is designed to output detection pulses resulting from optical or magnetic detection of the tooth unit 52a.

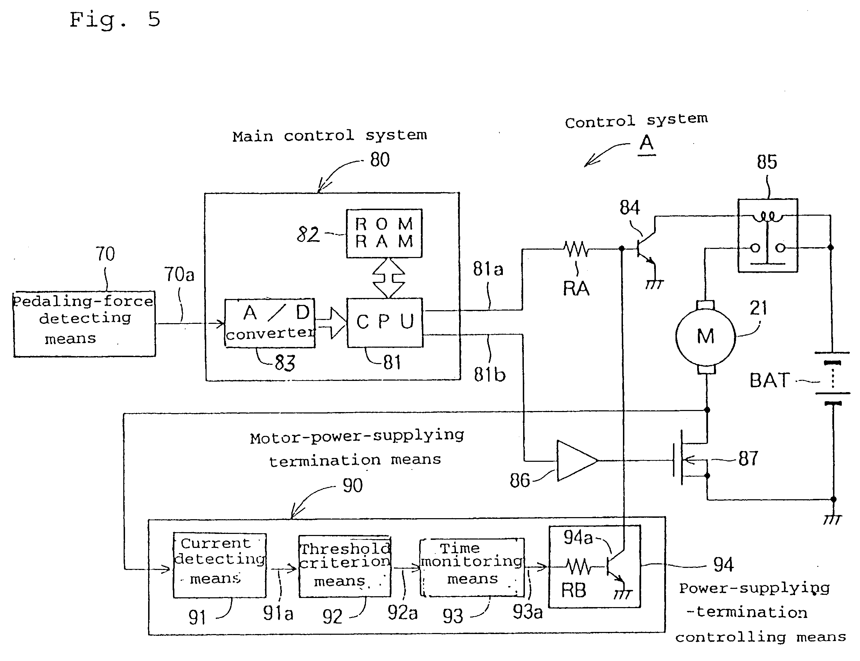

Fig. 5 is a block diagram showing the configuration of a control system A employed in the electrically assisted bicycle provided by the present invention.

The control system A comprises a main control system 80 and a motor-power-supplying termination means 90.

The functions of the main control system 80 are implemented by a single-chip microcomputer embedding, among other components, a CPU 81, a ROM/RAM unit 82 and an A/D converter 83. When a main switch which is not shown in the figure is turned on, the CPU 81 outputs a relay driving signal 81a to turn on a relay driving transistor 84. The relay driving transistor 84, in turn, activates a relay 85, putting the driving motor 21 in a state in which conduction of current can take place therein. It should be noted that the CPU 81 can be programmed so that the relay driving signal 81a is output when a pedaling force greater than a predetermined value is detected.

The CPU 81 takes in digital data resulting from analog-into-digital conversion of a voltage signal 70a by the A/D converter 83 which voltage signal 70a is output by a pedaling-force detecting means 70 to represent a detected pedaling force. Inputting the digital data, the CPU 81 generates and outputs a PWM signal 81b for driving the motor 21 to generate supplementary electrical power in accordance with the detected pedaling force. This PWM signal 81b is supplied to the gate of a field-effect transistor 87 through a gate driving circuit 86 in order to implement PWM operation on the driving motor 21.

The motor-power-supplying termination means 90 comprises a current detecting means 91, a threshold criterion means 92, a time monitoring means 93 and a power-supplying-termination controlling means 94.

The current detecting means 91 takes in a FET-on voltage synchronously with the on state of the field-effect transistor 87. The FET-on voltage is a voltage which appears between the drain and the source of the field-effect transistor 87 in an on state thereof. The FET-on voltage is then converted into a direct-current voltage by a low-pass filter (LPF), a time-constant circuit or the like. It should be noted that the FET-on voltage can also be subjected to direct-current amplification to provide a large direct-current voltage.

The threshold criterion means 92 compares the direct-current voltage output by the current detecting means 91 to represent the motor current with a threshold voltage set in advance. If the supplied motor current is found greater than the predetermined threshold value, a motor conduction detection signal 92a is set at typically a H (high) level. The criterion threshold is set at a value approximately greater than zero.

The time monitoring means 93 measures the duration during which the motor conduction detection signal 92a is continuously sustained at the H (high) level. If the duration is found longer than a predetermined period of time, a power-supplying termination signal 93a is set at typically a H (high) level. The predetermined period of time is an allowable continuation time which is set at a value with a time range, during which the pedaling force working a pedal slowly is almost zero, taken as a reference.

The power-supplying-termination controlling means 94 is designed to terminate the supplying of power to the driving motor 21 in accordance with the power-supplying termination signal 93a.

In the configuration shown in Fig. 5, the power-supplying termination signal puts an NPN transistor 94a in a conduction state, allowing the relay driving signal 81a output by the main control system 80 to flow to the NPN transistor 94a instead of a relay driving NPN transistor 84 for driving the relay 85. Normally, the relay driving signal 81a puts the base and the emitter of the NPN transistor 84 in a short-circuit state, actuating the relay 85. With the relay driving signal 81a flowing to the NPN transistor 94a instead of the NPN transistor 84, however, the relay 85 is not actuated, terminating the supplying of electric power to the driving motor 21. It should be noted that notation BAT denotes a battery power supply whereas notations RA and RB are each a base resistance.

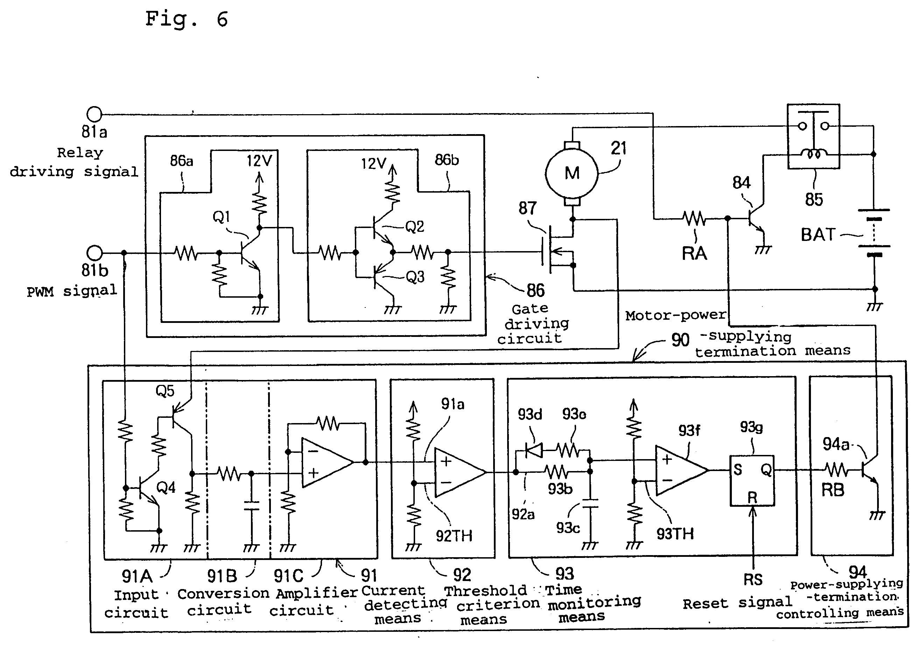

Fig. 6 is a diagram showing the configuration of a typical gate driving circuit 86 employed in the motor-power-supplying termination means.

The gate driving circuit 86 has a configuration wherein the PWM signal 81b having a logic amplitude of typically 5V is converted by a level shift circuit 86a employing an NPN transistor Q1 into a signal with a logic amplitude of typically 12V for driving the gate of the field-effect transistor 87 through a drive circuit 86b which comprises an NPN transistor Q2 and a PNP transistor Q3 connected to each other in series.

An input circuit 91A employed in the current detecting means 91 receives the PWM signal 81b, turning an NPN transistor Q4 and a PNP transistor Q5 on in order to take in the FET-on voltage of the field-effect transistor 87. It should be noted that, with the PNP transistor Q5, a FET-on voltage smaller than a voltage appearing between the base and the emitter of the PNP transistor Q5 can not be detected. Accordingly, an alternative design that uses a switching device such as a field-effect transistor for detecting a small motor current can also be adopted.

The FET-on voltage taken in by the input circuit 91A synchronously with the PWM signal 81b is converted into a direct-current voltage, strictly speaking, into a ripple voltage by a conversion circuit 91B comprising a resistor and a condenser before undergoing direct-current amplification at an amplification circuit 91C employing, among other components, an operational amplifier. A signal 91a output by the amplification circuit 91C is supplied to the threshold criterion means 92.

The threshold criterion means 92 employs a voltage comparator or the like for comparing the signal 91a representing the motor current to a threshold voltage 92TH. If the signal 91a is found greater than the threshold voltage 92TH, a criterion signal 92a is set at a H (high) level.

The time monitoring circuit 93 is designed by employing a timer circuit of the charging-discharging type. The time constant of a charging circuit comprising a resistor 93b and a condenser 93c is set at a high value while the time constant of a discharging circuit comprising a diode 93d and a resistor 93e is set at a low value. Thus, the voltage appearing between the terminals of the condenser 93c rises proportionally to the time during which the motor current is flowing. As the motor current goes down below a threshold current close to zero, however, the electric charge of the condenser 93c is discharged at a very high speed. A voltage comparator 93f compares the voltage appearing between the terminals of the condenser 93c to a set threshold voltage 93TH, setting its output at a H (high) level if the former is found higher than the latter. The H-level output, in turn, sets a flip-flop circuit 93g. With the flip-flop circuit 93g set, an NPN transistor 94g employed in the power-supplying-termination controlling means 94 is turned on, cutting off the conduction of current through the relay 85. As a result, the supplying of electric power to the driving motor 21 is halted. It should be noted that a reset signal from a reset circuit or the like not shown in the figure is supplied to the flip-flop circuit 93g for establishing an initial state of the flip-flop circuit 93g.

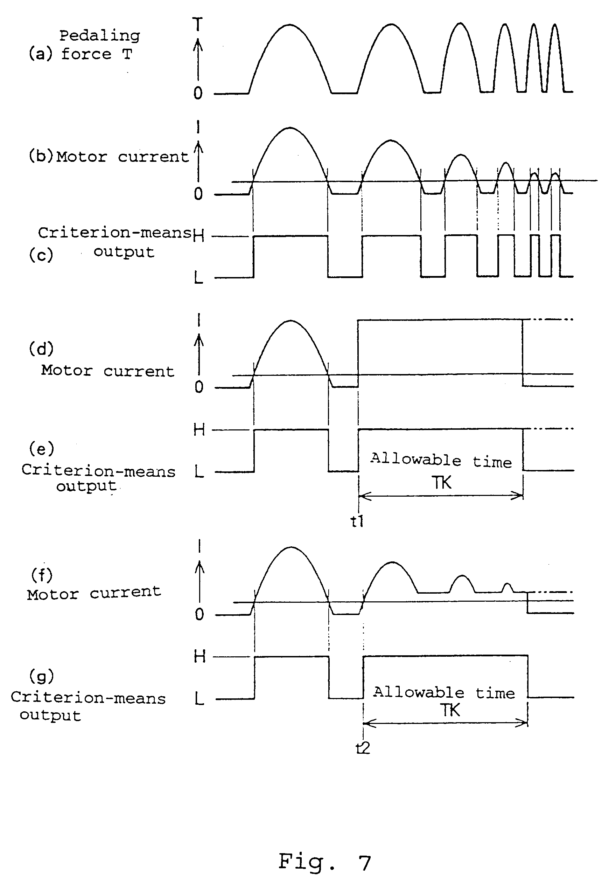

Fig. 7 shows time charts of operations of the control system.

As shown in Fig. 7 (a), the main control system 80 operates the motor 21 by using a PWM driving voltage in accordance with variations in pedaling force. The current flowing to the driving motor 21 is shown in Fig. 7 (b). When the speed at which the pedals are worked rises, the rotational speed of the driving motor 21 also increases, raising an induced electromotive force along a winding of the driving motor 21. As a result, the amount of electric power supplied by the battery power supply BAT to the driving motor 21 decreases.

The threshold criterion means 92 employed in the power-supplying-termination controlling means 94 outputs the criterion signal 92a during a period in which the motor current I exceeds the threshold current ITH as shown in Fig. 7 (c). When the motor current I keeps flowing starting at a point of time t1 as shown in Figs. 7 (d) and (e) for some reasons such as the PWM signal 81b being sustained at a H (high) level or the a failure resulting in a short circuit between the drain and the source of the field-effect transistor 87 for a period exceeding an allowable time TK, the supplying of electric power to the driving motor 21 is halted right away.

When the motor current I is not restored any more to zero starting at a point of time t2 as shown in Figs. 7 (f) and (g) for some reasons such as a failure due to an increased leak current in the field-effect transistor 87 of an abnormal operation of the function to detect the pedaling force, the supplying of electrical power to the driving motor 21 is terminated by the signal 93a output by the time monitoring means 93.

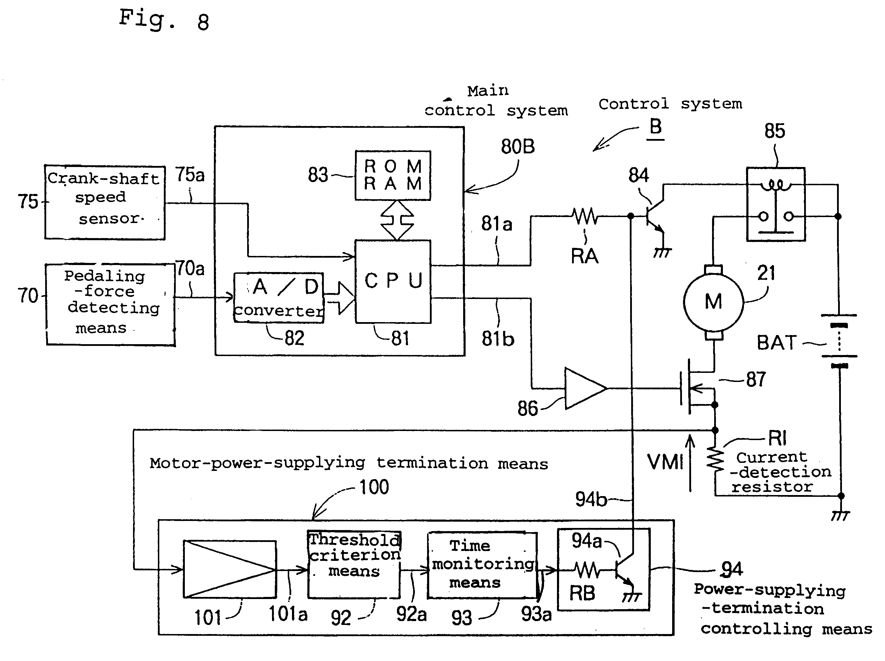

Fig. 8 is a block diagram showing another typical configuration of the motor-power-supplying termination means.

In a control system B shown in Fig. 8, a resistor RI for current detection is provided in series with the field-effect transistor 87 for controlling the conduction of current through the driving motor 21. A voltage VMI appearing between the terminals of the current-detection resistor RI represents the motor current. The voltage VMI is amplified by a direct-current amplifier 101 employed in the motor-power-supplying termination means 100. A voltage 101a output by the direct-current amplifier 101 is compared to a reference in order to determine whether the current flowing through the driving motor 21 exceeds a predetermined value. If a motor current greater than the predetermined value keeps flowing for a period longer than an allowable time, the relay 85 is put in a deactivated state, cutting off the supplying of electric power to the driving motor 21. It should be noted that, as an alternative, a signal 94b output by the power-supplying termination means 94 is used for driving an AND gate for blocking the furnishing of the motor driving signal 81a to the NPN transistor 84 which is employed for driving the relay 85.

The CPU 81 employed in the main control system 80B finds the rotational speed of the crank shaft from the signal 75a output by the crank-shaft speed sensor 75, controlling the operation of the driving motor 21 in accordance with the found rotational speed of the crank shaft and the pedaling force.

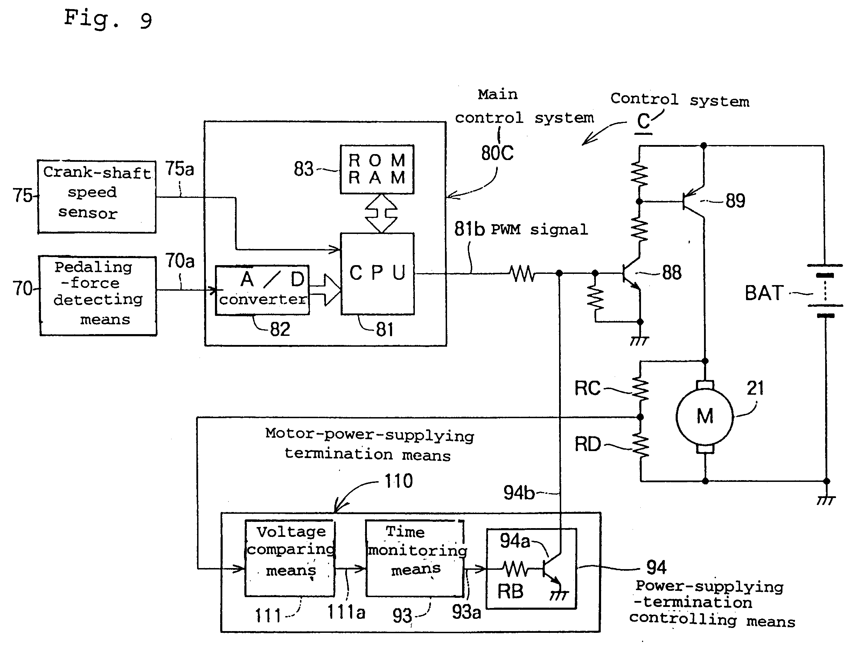

Fig. 9 is a diagram showing a block diagram of a motor-power-supplying termination means employing a technique of monitoring the motor voltage whereby the termination of the operation to supply electric power to the driving motor 21 is controlled in accordance with the voltage of the driving motor 21.

A control system C shown in the figure controls the operation to supply electric power to the driving motor 21 by driving an NPN transistor 88 and a PNP transistor 89 to switch on and off in accordance with the PWM signal 81b output by a main control system 80C. A voltage appearing between the terminals of the driving motor 21 is divided by means of a potentiometer comprising resistors RC and RD. A divided voltage output by the potentiometer is supplied to a voltage comparing means 111 employed in the motor-power-supplying termination means 110. The voltage comparing means 111 compares the divided voltage to a threshold voltage, setting a signal 111a output thereby typically at a H (high) level if the divided voltage is found higher than the threshold voltage. The time monitoring means 93 monitors the period of time during which the driving motor 21 keeps conducting current. If the voltage applied to the driving motor 21 is not restored to approximately zero within an allowable time, the operation to supply electric power to the driving motor 21 is terminated.

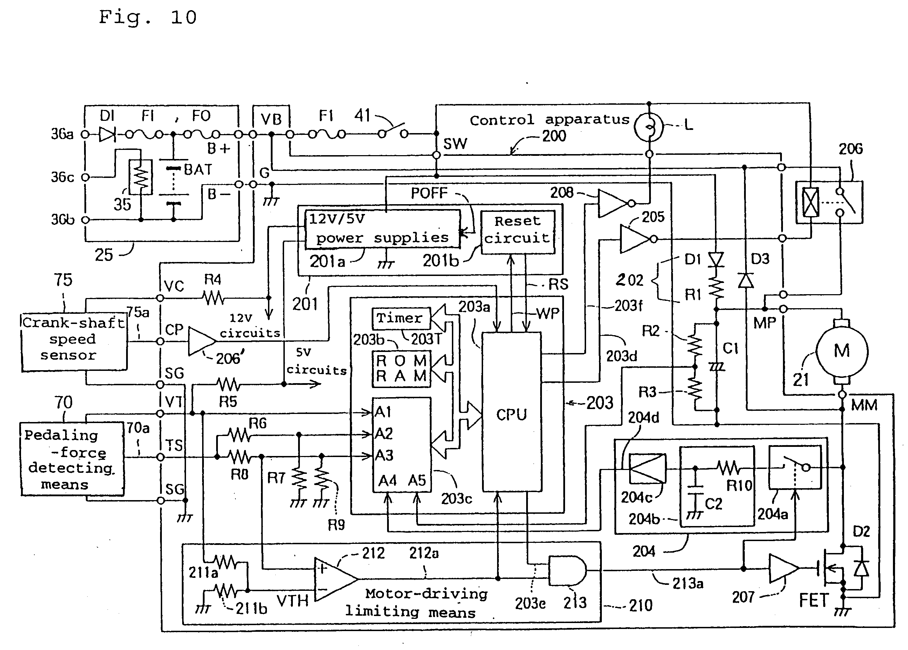

Fig. 10 is a diagram showing a circuit configuration of an actual example of the control system.

Electric power supplied by a battery power supply BAT in the battery case assembly 25 is applied from pins B+ and B- of the electric-power supplying connector 38 to power-supply pins B+ and B- of a control apparatus 200 through a fuse FO on the power-supplying side. It should be noted that electric power is charged from a pin 36a on the positive-pole side of the electric-power charging connector 36 through a diode DI and a fuse FI on the power-charging side. One end of the thermally sensitive resistor element 35 for monitoring the temperature of the battery during electric charging is connected to a pin 36b on the negative-pole side of the electric-power charging connector 36 while the other end thereof is connected to a signal pin 36c.

When the main switch (key switch) 41 is set to the ON position, electric power of the battery power supply BAT is supplied from a power-supply pin VB on the positive-pole side of the control apparatus 200 to a power-supply and reset circuit 201 through the fuse FO, the main switch 41 and a pin SW and, at the same time, a condenser C1 for regulating a motor power supply is charged through a charge circuit 202 comprising a diode D1 and a charging-current limiting resistor R1.

The power-supply and reset circuit 201 comprises 12V and 5V power supplies 201a for supplying power at regulated voltages of 12V and 5V respectively through voltage drops from the battery power supply BAT of typically 24V and a reset circuit 201b driven by the 5V power supply. The 12V power supply is applied to the crank-shaft speed sensor 75 and used as a voltage for controlling the gate of the power field-effect transistor (FET) which, in turn, controls the conduction of current flowing into the driving motor 21. The 5V power supply is, on the other hand, used for supplying electric power to, among other components, a single-chip microcomputer 203, the motor-driving limiting means 210 and a motor-current detecting circuit 204.

The reset circuit 201b transmits a reset pulse RS to a CPU 203a at the build-up time of the 5V power supply and also monitors watch-dog pulses WP output by the CPU 203a at predetermined intervals. If a watch-dog pulse WP is not detected by the reset circuit 201b for more than a predetermined period of time, the reset circuit 201b outputs a reset pulse RS, resetting (or initializing) the CPU 203a. In addition, if the supply of the watch-dog pulses WP is not resumed even after the reset pulse RS has been output, the reset circuit 201b transmits a 12V/5V-cut-off command POFF to the 12V and 5V power supplies 201a to terminate the supplying of the 5V and 12V power.

The functions of the main control system are implemented by the single-chip microcomputer 203 embedding, among other components, the CPU 203a, a ROM/RAM unit 203b, an A/D converter 203c and a timer 203T. In this circuit, the CPU 203a, the timer 203T and the motor-current detecting circuit 204 constitute the motor-power-supplying termination means.

Resistors R2 and R3 connected in series between the terminals of the condenser C1 regulating the motor power supply are used as a potentiometer for dividing the voltage appearing between the terminals of the condenser C1 to provide a voltage in an allowable input voltage range of the A/D converter 203c. A divided voltage output by the potentiometer is supplied to an input pin A5 of the A/D converter 203c. Receiving a reset pulse RS, the CPU 203a carries out initialization. Thereafter, the CPU 203a outputs a relay driving command 203d at a point of time a value resulting from A/D conversion of the divided voltage exceeds a voltage set in advance. The relay driving command 203d is supplied to a relay driving circuit 205 which, in turn, provides a current to an exciting winding employed in a relay 206. As the exciting winding conducts, contacts of the relay 206 are put in a closed state, applying electric power generated by the battery power supply BAT to the driving motor 21.

The control system is designed so that a voltage appearing between the pins of the condenser C1 for regulating the motor power supply is monitored and the contacts of the relay 206 are put in a closed state only after the condenser C1 has been charged. As a result, no excessive charging current flows through the contacts of the relay 206, which excessive charging current would otherwise damage the contacts. It should be noted that the control system can also be designed so that the relay 206 is actuated when the charging of the condenser C1 is judged to have been completed at the time the rate per unit time of the increase in voltage appearing between the pins of the condenser C1 becomes smaller than a predetermined value. The judgment based on the rate of change in voltage allows completion of the charging to be detected without regard to the voltage of the battery power supply BAT.

When the field-effect transistor (FET) for controlling the flow of current to the driving motor 21 becomes bad due to a short-circuit connection between the drain and the source thereof or a diode D2 connected in parallel to the drain and the source for absorbing a reversed surge voltage developed between the drain and the source becomes bad because of a short-circuit junction therein, the potential between the pins of the condenser C1 becomes equal to a divided voltage output by a potentiometer across the battery voltage comprising a charging-current limiting resistor R1 and the resistance of the winding of the driving motor 21. By the way, the resistance of the charging-current limiting resistor R1 has a value sufficiently greater than that of the winding of the driving motor 21. Accordingly, in the event of a short-circuit failure described above, the voltage between the pins of the condenser C1 will not rise due to charging, inhibiting the actuation of the relay 206. As a result, an excessive current caused by such a short-circuit failure can be prevented in advance from being supplied.

In addition, the CPU 203a monitors the voltage between the pins of the condenser C1 even while the driving motor 21 is rotating, adjusting the conduction ratio (duty cycle) of the PWM signal 203e so as to provide a desired supplementary torque based on the actual voltage applied to the driving motor 21. As a result, the desired torque can be generated even if the voltage of the battery power supply BAT becomes low.

The control system is designed so that a surge voltage with a reversed polarity generated when stopping the current flowing to the driving motor 21 is absorbed by the battery power supply BAT through a diode D3. The fuse FO on the power-supplying side is a large-current fuse having a current withstanding capacity of several tens of amperes. Since electric power is supplied to the driving motor 21 through the contacts of the relay 206, the main switch 41 having a small current withstanding capacity and a fuse F1 with a small current withstanding capacity of several amperes connected in series with the main switch 41 can be employed.

12V power is supplied to the crank-shaft speed sensor 75 through a bleed resistor R4. A short-circuit failure may occur in the crank-shaft speed sensor 75 rather than at a terminal VC. In the event of such a short-circuit failure, a short-circuit current is limited by the bleed resistor R4, allowing the 12V power supply system to be protected. The signal 75a supplied to a pin CP to represent the rotational speed of the crank shaft 15 undergoes a waveform shaping process at a waveform shaping circuit 206' for outputting a signal having a logic amplitude of the 5V system. The signal output by the waveform shaping circuit 206' is then supplied to an input pin of the CPU 203a.

5V power is supplied to the pedaling-force detecting means 70 through a bleed resistor R5. A short-circuit failure may occur in the pedaling-force detecting means 70 rather than at a terminal VT. In the event of such a short-circuit failure, a short-circuit current is limited by the bleed resistor R5, allowing the 5V power supply system to be protected. The pedaling-force detection signal 70a, a voltage signal supplied to a terminal TS, is divided by two potentiometers having voltage ratios different from each other. The divided voltages output by the potentiometers are supplied to the A/D converter 203c. One of the potentiometers comprises resistors R6 and R7 to provide a typical voltage ratio of 1/2 whereas the other potentiometer comprises resistors R8 and R9 to provide a typical voltage ratio of 1/4.

The CPU 203a inputs a detected torque represented by the pedaling-force detection signal 70a as two signals: the two divided voltages from the potentiometers which are each converted into digital data by the A/D converter 203c. In the case of a small detected torque, the digital data resulting from the A/D conversion of the divided voltage output by the potentiometer having the 1/2 voltage ratio to an A/D input pin A2 is selected. In the case of a large detected torque, on the other hand, the digital data resulting from the A/D conversion of the divided voltage output by the potentiometer having the 1/4 voltage ratio to an A/D input pin A3 is selected. In this way, the detected torque is converted into digital data by taking the voltage ratios into consideration. Such a configuration and processing allow a torque to be detected with a high degree of accuracy over a wide range of small to large torque values even without the necessity to raise the resolution of the A/D converter 203c.

Since the detection signal 70a output by the pedaling-force detecting means 70 is affected by the voltage of the power supply supplied thereto, the voltage of the power supply actually fed to the pedaling-force detecting means 70 is also input to the A/D converter 203c through an A/D input terminal A1 to be converted into digital data as well. The digital data resulting from the A/D conversion is then used for compensating the detection signal 70a for the effect of the voltage of the power supply on the detection signal 70a. In this way, the pedaling force can be detected with an even higher degree of accuracy.

The voltage comparator 212 employed by the motor-driving limiting means 210 compares the threshold voltage VTH, a divided voltage generated by a potentiometer comprising resistors 211a and 211b for dividing the voltage of the power supply applied to the pedaling-force detecting means 70, to a divided voltage generated by a potentiometer comprising resistors R8 and R9 for dividing the pedaling-force detection signal 70a. Since the threshold voltage VTH obtained by dividing the voltage of the power supply applied to the pedaling-force detecting means 70 is constant, it is possible to determine whether or not the pedaling force (torque) exceeds a predetermined value with a high degree of accuracy.

A signal 212a output by the voltage comparator 212 is supplied to the CPU 203a through an input terminal thereof. The CPU 203a monitors the periodical generation of L (low) level of the signal 212a output by the voltage comparator 212 which indicates that the pedaling force is in a zero state. If the zero state of the pedaling force is not detected periodically while the operation of the driving motor 21 is being controlled by pedaling-force detection based on A/D converted data, the operation to output the PWM signal 203e is ended to terminate the operation of the driving motor 21. In this way, an unnecessary torque can by all means be prevented from being generated whenever the operation of the pedaling-force detection system such as the pedaling-force detecting means 70 or the A/D converter 203c becomes abnormal, requiring such a torque.

Based on information on the pedaling force received through the A/D converter 203c and the signal 75a representing the rotational speed of the crank shaft 15, the CPU 203a searches a PWM duty map for a duty cycle of the PWM signal 203e to be generated and output thereby.

The PWM signal 203e is passed on to a FET driving circuit 207 by the logical-product circuit 213 as long as the signal 212a output by the comparator 212 is sustained at a H (high) level or, in other words, as long as the detected pedaling force is greater than a predetermined value. The FET driving circuit 207 provides electric power to the gate of the field-effect transistor (FET) in accordance with a signal 213a output by the logical-product circuit 213, switching the field-effect transistor (FET) on and off. As a result, the driving motor 21 is run under PWM control.

The CPU 203a also monitors the motor current to determine whether or not the driving motor 21 is running normally. If an abnormal motor current is detected, the operation of the driving motor 21 is limited.

When the driving motor 21 is in a conducting state, a voltage referred to hereafter as a FET-on voltage, appears between the drain and the source of the field-effect transistor FET. The magnitude of the FET-on voltage is equal to the product of the current flowing to the driving motor 21 and an on-resistance of the field-effect transistor FET.

An electronic switch 204a employed by a motor-current detecting circuit 204 is turned on synchronously with the H (high) level of the signal 213a output by the logical-product circuit 213, supplying the FET-on voltage to a time-constant circuit 204b comprising a resistor R10 and a condenser C2. The electronic switch 204a can be designed using a bipolar transistor or a field-effect transistor. The voltage of the capacitor C2 resulting from the supplying of the FET-on voltage to the time-constant circuit 204b in synchronization with the signal 213a output by the logical-product circuit 213 is a nearly-direct-current voltage (ripple voltage) having a time constant determined by the time-constant circuit 204b. The nearly-direct-current voltage (ripple voltage) is direct-current amplified by a voltage amplifier 204c into a voltage signal 204d which is supplied to the A/D converter 203c through an A/D conversion input terminal A4. The ripple voltage is converted into digital data representing the motor current, which data is used by the CPU 203a to determine whether or not the motor current is excessive. If the motor current is found excessive, the conduction duty cycle is set to a low value or the operation of the driving motor 21 is terminated.

Furthermore, at the time digital voltage data from the A/D converter 203c representing the motor current exceeds a value representing a motor current of zero or a motor current close to zero set in advance, the CPU 203a requests a timer 203T to start time measurement. If the motor current does not go below the value representing a motor current of about zero within an allowable time set in advance, the operation to output a motor driving command 203d is discontinued in order to terminate the operation to supply electric power to the driving motor 21.

In the present circuit example described above, a motor-power-supplying termination means comprises the CPU 203a, the A/D converter 203c and the timer 203T embedded in the single-chip microcomputer 203.

It should be noted that the motor current can also be monitored by connecting a resistor for current monitoring in series with the field-effect transistor (FET) and measuring a voltage drop between the ends of the current monitoring resistor. In this circuit example, none the less, the FET-on voltage is detected, eliminating a loss that would otherwise be incurred in the current monitoring resistor. As a result, the battery power supply BAT can be used with a high degree of efficiency.

In addition, the CPU 203a also compares data representing the voltage of the battery power supply BAT input through the A/D converter 203c to a residuum criterion voltage set in advance. If the voltage of the battery power supply BAT is found lower than the residuum criterion voltage, a display signal 203f is output to a lamp driving circuit 208 to turn the lamp L on, urging charging of the battery. It should be noted that the lamp L can also be turned on and off instead of being turned on continuously in order to save electric power. In this case, the lamp L is turned on and off intermittently at a period of typically several seconds.

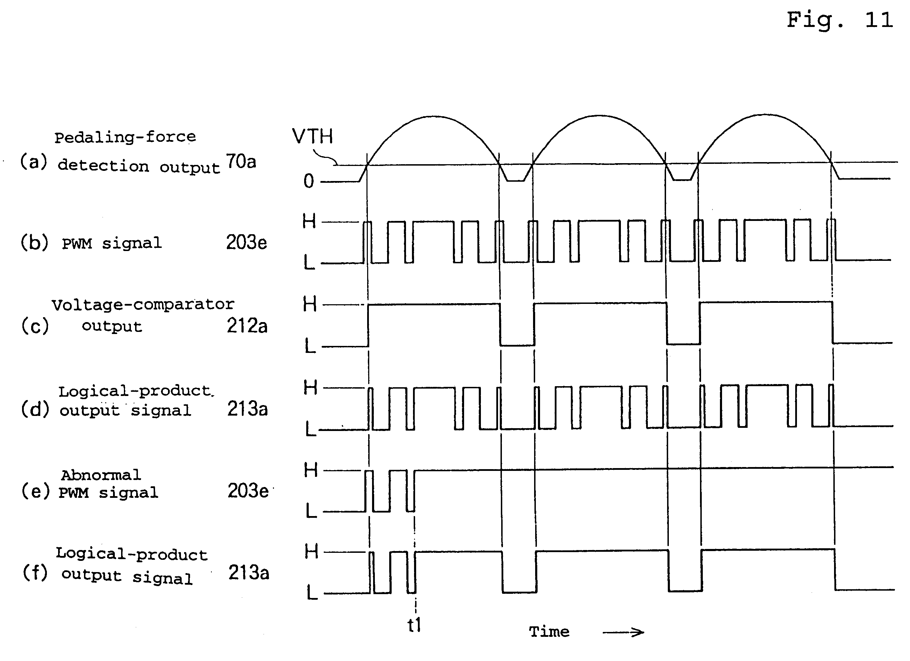

Fig. 11 shows time charts showing the operation of the motor-driving limiting means.

When the pedals of a bike are being worked, at upper and lower dead centers, the pedaling forces are not applied. Therefore, the detection signal 70a output by the pedaling-force detecting means 70 is a voltage waveform appearing as periodically repeated hills and valleys as shown in Fig. 11 (a). The voltage comparator 212 sets the signal 212a at a H (high) level during periods in which the pedaling-force detection signal 70a is greater than the threshold voltage VTH as shown in Fig. 11 (c). Accordingly, when the CPU 203a generates and outputs a PWM signal 203e based on the pedaling-force detection signal 70a as shown in Fig. 11 (b), the logical-product circuit (AND gate) 213 passes on the PWM signal 203e as a logical-product output signal 213a shown in Fig. 11 (d) which logical-product output signal 213a is used for controlling the operation of the driving motor 21. That is to say, only during a period in which the pedaling-force detection signal 70a is greater than the threshold voltage VTH is the operation of the driving motor 21 allowed for supplying supplementary electric power.

Assume that the single-chip microcomputer 203 does not function normally any more after, for example, a point of time t1 for some reasons as shown in Fig. 11 (e). Even if the PWM signal 203e is kept at a H (high) level after the point of time t1 due to the abnormal operation of the single-chip microcomputer 203, the operation of the driving motor 21 is enabled only during periods in which the pedaling-force detection signal 70a is greater than the threshold voltage VTH as shown in Fig. 11 (f). As a result, supplementary electric power is by no means supplied by the driving motor 21 when the pedals are not being worked even if the operation of the single-chip microcomputer 203 becomes abnormal, requiring such supplementary electric power.

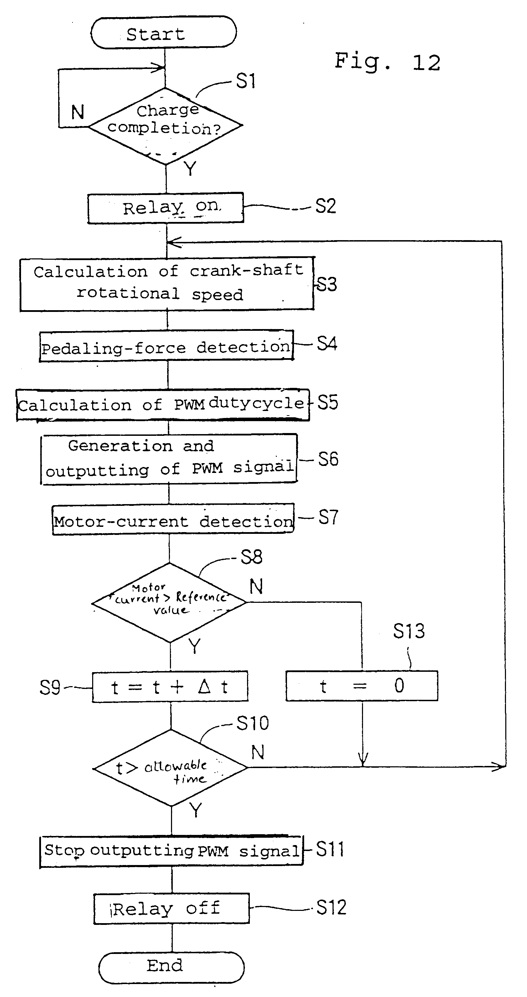

A flowchart of the overall operation of the control apparatus is shown in Fig. 12.

At a step S1, the CPU 203a determines whether or not the charging of the condenser C1 for regulating the motor power supply has been completed. If the charging has been completed, the flow proceeds to a step S2 to output a relay driving command 203d after the completion of the charging. The flow then continues to a step S3 to compute the rotational speed of the crank shaft 15, a step S4 to detect the pedaling force, a step S5 to find the duty cycle of the PWM signal 203e and then a step S6 to output the PWM signal 203e.

At a step S7, the CPU 203a detects the motor current. The flow then continues to a step S8 to determine whether or not the motor current exceeds a reference value. If the motor current is found greater than the reference value, the flow proceeds to a step S9 to request the timer 203T to carry out a time measurement. The flow then proceeds to a step S10 to compare the period during which the motor current is greater than the reference value to an allowable time. If the period is found greater than the allowable time, the flow proceeds to a step S11 to terminate the operations to output the PWM signal 203e and the relay driving command 203d in order to end the supplying of electrical power to the driving motor 21. If the motor current is found smaller than the reference value at the step S8, on the other hand, the flow proceeds to a step S13 to reset the measurement time in the timer 203T. The flow then returns to the step S3 to repeat the processings to control the operations of the driving motor 21. If the period is found smaller than the allowable time at the step S10, the flow also returns to the step S3 to repeat the processings to control the operations of the driving motor 21. In this embodiment, the functions of the motor-power-supplying termination means are implemented by the processings carried out at the steps S7 to S13.

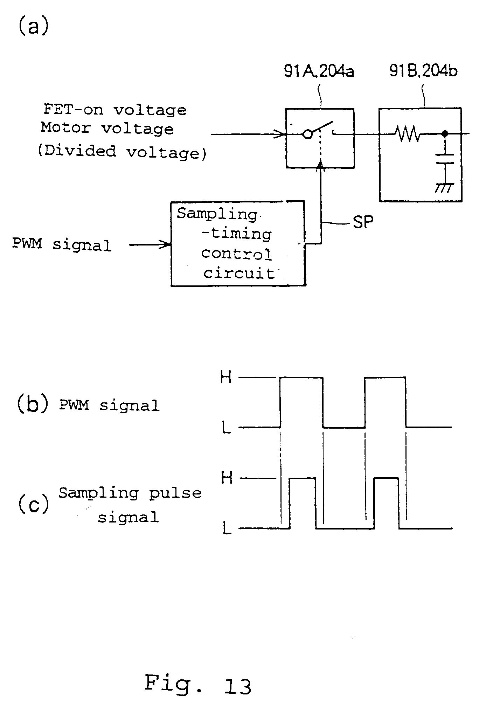

Fig. 13 is an explanatory diagram showing another typical configuration of the current detecting means.

When the motor current or motor voltage is taken in synchronously with the PWM signal, there is the risk of interference by surge currents or surge voltages which are generated accompanying the switching on and off of the field-effect transistor. For this reason, a sampling-timing control circuit 220 is provided as shown in Fig. 13 (a). The sampling-timing control circuit 220 generates sampling pulses SP for providing sampling periods which sampling pulses SP each build up after the rising edge of a PWM-signal pulse shown in Fig. 13 (b) and fall down before the falling edge of the PWM-signal pulse. By taking in the FET-on voltage or the voltage of the driving motor 21 only during the sampling periods defined by the sampling pulses SP shown in Fig. 13 (c), the motor current or the motor voltage can be detected with a higher degree of accuracy.

As described above, in the electrically assisted bicycle provided by the present invention, the current supplied to the driving motor or the voltage applied thereto is detected and, if a state in which the detected motor current or motor voltage does not become equal to a predetermined value close to zero for a period longer than an allowable time set in advance, the operation to supply electric power to the driving motor is terminated. As a result, when the pedaling-force detection or the motor-operation controlling system based on the detected pedaling force does not function normally, unnecessary supplementary force can be prevented from being supplied to the driving motor by terminating the operation to supply electric power to the driving motor. On top of that, in the event of a failure such as an increased leak current flowing through a semiconductor switching device for switching on and off the electrical power supplied to the driving motor, unnecessary supplementary force can also be prevented as well from being supplied to the driving motor by terminating the operation to supply electric power to the driving motor.

The present invention seeks to prevent unnecessary electric power from being supplied in an electrically assisted bicycle, wherein electric power output by a motor thereof is utilized as a supplement to human power for pedaling the bicycle, by monitoring the voltage or current supplied to the motor.

## Claims

1. An electrically assisted bicycle utilizing electric power output by a motor (21) as a supplement to human power serving as a driving force characterized in that said electric-power supplemented bicycle (1) is equipped with a motor-power-supplying termination means (90; 100; 110) for terminating an operation to supply electric power to said motor (21) when a state, in which the magnitude of a voltage or current supplied to said motor (21) does not become equal to a value close to zero set in advance, has been continuing for a period longer than an allowable time set in advance.

## Patentansprüche

1. Elektrisch unterstütztes Fahrrad, welches durch einen Motor (21) als eine Ergänzung zu als eine Antriebskraft dienender menschlicher Leistung ausgegebene elektrische Leistung verwendet,
dadurch gekennzeichnet, daß das mit elektrischer Leistung unterstützte Fahrrad (1) mit einer Einrichtung (90; 100; 110) zum Beenden der Motorleistungszuführung versehen ist, um einen Betrieb zum Zuführen elektrischer Leistung an den Motor (21) zu beenden, wenn ein Zustand, in welchem die Größe einer dem Motor (21) zugeführten Spannung oder eines dem Motor (21) zugeführten Stroms nicht gleich einem vorab eingestellten Wert nahe null wird, während einer Periode angedauert hat, die länger ist als eine vorab eingestellte zulässige Zeit.

## Revendications

1. Bicyclette assistée par un moteur électrique utilisant de l'énergie électrique délivrée par un moteur (21) en tant que complément à l'énergie humaine servant de force d'entraînement, caractérisée en ce que ladite bicyclette assistée par un moteur électrique (1) est équipée de moyens de fin d'alimentation du moteur (90; 100; 110) afin de mettre fin à une opération d'alimentation en énergie électrique du dit moteur (21) lorsqu'un état, dans lequel l'amplitude d'une tension ou d'un courant alimentant ledit moteur (21) ne devient pas égale à une valeur proche de zéro réglée à l'avance, se prolonge sur une période plus longue qu'une durée admissible réglée à l'avance.
